# EUROPEAN PATENT APPLICATION

(11) **EP 1 559 682 A1**
(43) Date of publication of application: **03.08.2005**
(21) Application number: 03717674.0
(22) Date of filing: 21.04.2003
(51) Int. Cl.: C01D 3/20, C01F 11/32, C22B 34/12, C22B 9/10

(54) **METHOD OF PURIFYING METAL SALT, METHOD OF DEACIDIFYING TITANIUM MATERIAL AND METHOD OF PRODUCING THE SAME**

(71) Applicant: Sumitomo Titanium Corporation, Amagasaki-shi, Hyogo 660-8533 (JP)
(72) Inventor: SHIMOSAKI, Shinji, Amagasaki-shi, Hyogo 660-8533 (JP)
(74) Representative: Cresswell, Thomas Anthony
(86) International application number: PCT/JP2003/005065
(87) International publication number: WO 2004/094312

(57) **Abstract**

A purification method of a metal salt which comprises bringing a metal salt formed by melting an alkali metal salt, an alkaline earth metal salt or a mixture thereof into contact with titanium or the like, thereby adsorbing impurities in the metal salt, a deoxidization method by melting metallic calcium into a molten product of the metal salt purified by the purification method and bringing the same into contact with a titanium material, and a production method of the titanium material which comprises conducting molten salt electrolysis by using the molten product of the metal salt purified by the purification method for an electrolytic bath. According to the purification method or the production method, a molten metal salt comprising an alkali metal salt, an alkaline earth metal salt or a mixture thereof can be purified simply and conveniently at good efficiency. Then, use of the metal salt purified by the purification method can minimize contamination caused by the metal impurities in the molten salt and the titanium material of high quality can be produced. This is applicable generally as a production method of titanium of high impurity optimal for use in electronic parts.

## Description

### Technical Field

The present invention concerns a method of purifying a metal salt, as well as a deoxidization method and a production method of a titanium material and, more in particular, it relates to a method of purifying a metal salt, as well as a deoxidization method and a production method of a titanium material for preventing contamination from a molten salt in a production step and producing products of high quality at a good yield.

### Background Art

In recent years, titanium has been used also as electronic materials including target materials for use in sputtering and the application field thereof has been extending. For generalized use of titanium as materials for electronic parts requiring high accuracy, it is necessary for high purity in view of quality. Recently, further improvement of the quality for use as electronic parts has been demanded and titanium of higher purity is demanded for use in them.

However, since titanium is a metal which is, by nature, active, particularly at high temperature, it is liable to undergo contamination from substances in contact therewith in the production step and it is difficult to produce titanium of high purity. Therefore, it is an important technical subject to mitigate contamination due to contact with other substances in the production step thereof for producing titanium of high purity at a good yield.

Further, since titanium is an active metal, it tends to chemically bond with oxygen to form oxides. As a method of decreasing oxygen in titanium, a method of melting a salt of an alkali metal and/or alkaline earth metal and deoxidizing titanium with metallic calcium melted in the molten salt thereof has been developed. For example, Publication of Examined Japanese Patent Application No. 08-14009 describes an invention relating to a method of producing titanium with a reduced oxygen content. In the method described in this publication, starting titanium material is charged in a molten salt (flux), melting metallic calcium in a molten salt while bringing into contact with the molten salt in a gaseous or liquidus state, causing the same to react on the starting titanium material, thereby deoxidizing titanium.

In the method described in the publication, while oxygen can be removed effectively, in a case of using a molten salt of low purity, most of impurities other than oxygen contained in the molten salt are attracted to titanium and contaminate titanium to lower the purity of titanium.

Commercially available salts of alkali metals or alkaline earth metals of usual grade contain a trace amount of heavy metals such as iron or nickel as impurities. Accordingly, such impurities migrate in the titanium deoxidizing process to titanium products to bring about a problem of contaminating the products.

While contamination of the products can be mitigated by using the salts of alkali metals or alkaline earth metals at the reagent guaranteed class, it industrially requires the use of the metal salt in a great amount, and use of such expensive salt in a great amount is not practical from an economical view point of the cost.

With an aim of purifying a metal salt of a usual grade, while a method of bubbling gaseous chlorine in a molten salt to purify the molten salt has been conducted generally, but this purification method mainly intends to remove the water content remaining in the molten salt and can not remove metal impurities.

Accordingly, it has been demanded for development of a purification method starting from the salt of alkali metal or alkaline earth metal of usual grade as the raw material and forming the same simply into a salt with less metal impurities. Then, in a case where the alkali metal salt or alkaline earth metal salt with less metal impurities can be obtained simply, it is possible for deoxidizing titanium or producing titanium of high quality by using such alkali metal salt or alkaline earth metal salt.

### Disclosure of the Invention

The present invention has been accomplished in view of the demand for the development of the purification method described above and it is an object thereof to provide a purification method of a metal salt capable of simply and effectively purifying a molten salt which may possibly form a contamination source in the production step of titanium, as well as a deoxidization method of a titanium material and a production method of a titanium material using the metal salt purified by the purification method.

The present inventors have noted on titanium and zirconium as adsorbents for metal impurities. Both titanium and zirconium are highly active metals at high temperature and tends to chemically bond with a trace amount of metal impurities such as iron or nickel contained in molten salts. Further, since titanium alloys and zirconium alloys are also active metals, a similar effect can be expected also by using the titanium alloys or the zirconium alloys instead of titanium and zirconium.

In view of the above, by adsorbing impurities in the metal salt by bringing titanium, titanium alloy, zirconium or zirconium alloy into contact with the molten salt, the molten salt can be purified. The content of metal impurities is extremely low in the molten salt of the thus obtained alkali metal and/or alkaline earth metal.

Then, when deoxidization or production of a titanium material of high purity is conducted by using the molten salt purified as described above, oxygen contained in the titanium material of high purity can be removed easily with no contamination caused by the metal impurities, or a titanium material of high purity having higher quality can be produced.

The present invention has been accomplished based on the finding described above and the gist thereof resides in a method of purifying a metal salt having a feature in the following (1) and (2), a method of deoxidizing a titanium material having a feature in the following (3), and a production method for titanium having the following feature (4).
(1) A purification method for a metal salt comprising adsorbing impurities in the metal salt by bringing the metal salt formed by melting an alkali metal salt, an alkaline earth metal salt or a mixture thereof into contact with one or more of titanium, titanium alloy, zirconium and zirconium alloy.
(2) A method of purifying the metal salt described in (1) above wherein the metal salt is melted in a vessel made of titanium or made of titanium alloy, or in a vessel lined with the titanium or the titanium alloy.
(3) A method of deoxidizing a titanium material comprising the step of melting metallic calcium in a molten product of the metal salt purified by the purification method described in (1) or (2) above and bringing the same into contact with the titanium material.
(4) A method of producing the titanium material comprising the step of conducting molten salt electrolysis by using the molten product of the metal salt purified by the purification method described in (1) or (2) above for the electrolysis bath.

### Brief Explanation of Drawings

Fig. 1 is a view schematically explaining the constitution of an apparatus for purifying a molten salt used in the example of the present invention.
Fig. 2 is a view showing the progress of the concentration of iron in calcium chloride when plate-like titanium or foil-like titanium is used as an adsorbent for metal impurities.

### Best Mode for Carrying Out the Invention

The content of the present invention comprises, being classified generally, (A) a purification method of a metal salt, (B) a deoxidization method of a titanium material and (C) a production method of the titanium material by molten salt electrolysis. Accordingly, the content is to be described specifically while being partitioned into (A), (B) and (C) respectively.

### (A) Purification method of metal salt

Purification of a metal salt is conducted by bringing a metal salt formed by melting an alkali metal salt, an alkaline earth metal salt or a mixture thereof (hereinafter also referred to as "molten salt") into contact with one or more of titanium, titanium alloy, zirconium and zirconium alloy (hereinafter referred to as "titanium or the like"), thereby adsorbing the impurities in the metal salt to titanium or the like.

Contact of titanium or the like means herein mere immersion of titanium or the like in the metal salt and it is not accompanied, for example, by a special treatment such as supply of current to the molten salt.

As described above, a commercially available salt of an alkali metal or alkaline earth metal of usual grade contains a trace amount of heavy metals as impurities. In a case of deoxidizing a titanium material of high purity or producing a titanium material of high purity by molten salt electrolysis by using the molten salt formed by melting such a salt, metal impurities are taken into the titanium material of high purity to lower the purity of the titanium material at high purity. In order to avoid this, the molten salt is previously purified. The type and the mixing ratio of the metal salts formed by melting the alkali metal salt, alkaline earth metal salt and a mixture thereof, that is, the molten salt used herein are not restricted particularly.

For the molten salt, one or more of titanium, titanium alloy, zirconium and zirconium alloy is selected and brought into contact therewith. Thus, the titanium or the like acts as the adsorbent for the metal impurities, and the metal impurities in the molten salt are taken into titanium or the like. Upon contact of the molten salt and titanium or the like, the titanium or the like acts as the adsorbent by not only entirely immersing the titanium or the like but also partially immersing them into the molten salt.

Upon purification of the metal salt, it is preferred that the titanium or the like is disposed in a vessel so that the total immersing surface area of the titanium or the like is larger. This can proceed purification at a higher efficiency. Further, for proceeding purification at a higher efficiency, the molten salt may be stirred.

The titanium or the like may be in any form including a plate-like shape. As described above, since the purification efficiency is improved as the total immersing surface area in the molten salt is larger, it is preferably in the form, for example, of foil, honeycomb, or sponge (porous body). In view of the cost, since machining chips formed upon machining titanium are available at a reduced cost and in the form of thin plate, a sufficient effect can be obtained.

More specifically, assuming the volume of the metal salt as V (cm³) and the total immersing surface area of the titanium or the like as S (cm²), it is preferred that the ratio V/S is 10 or less. This is because the content of each of metal impurities can be lowered to the order of 1 ppm or less in about 50 hrs in a case where V/S is 10 or less. However, even when V/S is 10 or more, the content of the metal impurities can be lowered in the same manner, providing that V/S is 100 or less, by stirring the metal salt, or shaking or jogging the titanium or the like in the metal salt.

The adsorption effect obtained by the contact of the molten salt with the titanium or the like can be obtained at about 500°C providing that the temperature of the molten salt is at or above the melting point. For adsorbing the metal impurities more efficiently and conducting the purification effectively, the temperature of the molten salt is preferably 700°C or higher. While the upper limit for the temperature of the molten salt is not defined particularly, it is necessary that the temperature is at the boiling point of the molten salt or lower and at the melting point of the titanium or lower.

The vessel for melting the metal salt is constituted of a material not leaching ingredients that may form impurities to the molten salt. For example, oxides such as quartz and alumina, nickel, titanium, molybdenum or the like can be used as the material for the vessel. It is not necessary that the vessel is entirely constituted with the material described above, but the material may be lined at least to a portion that it is in contact with the molten salt.

Considering a case where the titanium of high purity is deoxidized in the exactly same vessel used for the purification of the metal salt, it is preferred that at least the portion of the vessel in contact with the molten salt is made of the titanium or the titanium alloy. This is because use of the metal identical with that of the final product in the present invention has no worry of contamination caused by leaching from the vessel and, further, titanium or the titanium alloy also has an effect of adsorbing the impurity metals.

### (B) Deoxidization method of titanium material

The titanium material can be deoxidized by melting metallic calcium into a molten salt (molten product of metal salt) purified by the purification method (A) described above and bringing it into contact with the titanium material. Deoxidization proceeds when the calcium melted in the molten salt reacts with oxygen in the titanium material to form CaO and oxygen is released into the molten salt.

In the present invention, since the molten salt purified by the purification method (A) is used, it is possible to prevent intrusion of the metal impurities into the titanium material and prevent degradation of the quality and lowering of the yield caused by the contamination of the final product.

The deoxidization of the titanium material can be conducted successively after practicing the purification method (A) in the vessel used for the purification method (A). This can efficiently proceed the production step and is free from the worry of contamination caused by the impurities intruded upon exchange or transportation of the vessel.

### (C) Production process of titanium material by molten salt electrolysis

The titanium material of high purity can be produced by conducting the molten salt electrolysis using the molten salt (molten metal salt) purified by the purification method (A) for the electrolytic bath. In the molten salt electrolysis, anodic melting and cathodic precipitation are conducted in the molten salt and, in order to purify the titanium material to a higher level, use of titanium material of high purity as the anode is preferred. In the present invention, since the molten salt purified by the purification method (A) is used for the electrolytic bath, it is possible to prevent the intrusion of the metal impurities into the titanium material and prevent the degradation of the quality and the lowering of the yield caused by contamination of the final products.

Production of the titanium material by the molten salt electrolysis can also be conducted successively, like in (B), after practicing the purification method (A) in the vessel used for the purification method (A). Also in this case, the production step can be proceeded efficiently and it is free from the worry of contamination caused by the impurities intruded upon exchange or transportation of the vessel.

### (Example)

Descriptions are to be separately made for (A) purification method of a metal salt, (B) deoxidization method of a titanium material and (C) production method of a titanium material by molten salt electrolysis with reference to concrete examples.

### (A) Purification method of metal salt

At first, for confirming the adsorption effect of metal impurities by a titanium plate, the titanium plate was charged in a vessel containing a molten salt and the molten salt was purified.

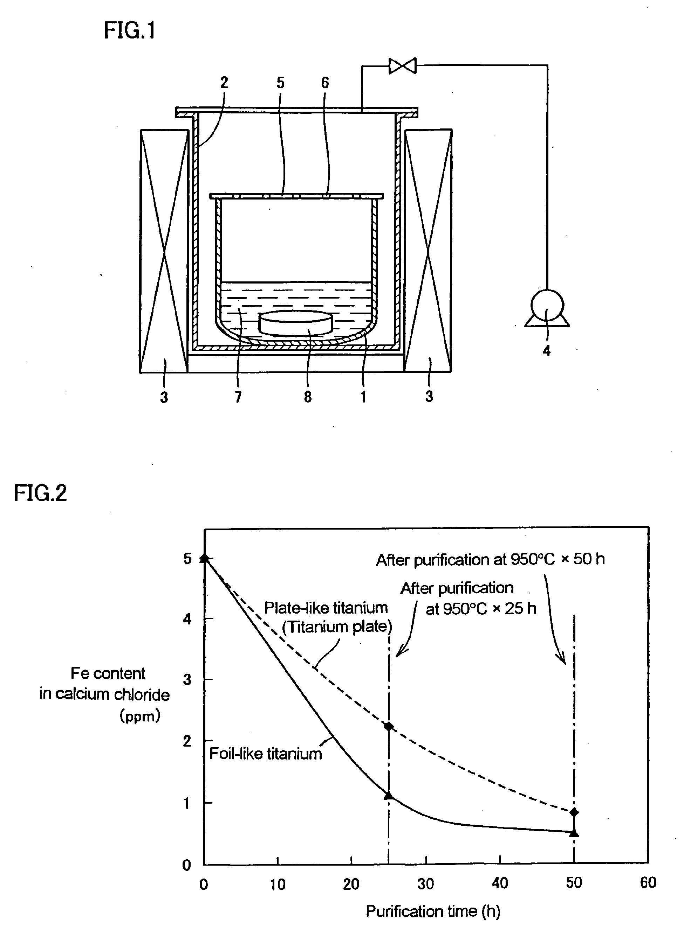

Fig. 1 schematically shows the constitution of an apparatus for purifying a molten salt used in the example. As shown in Fig. 1, the purification apparatus for the molten salt comprises an inner vessel 1 for containing the molten salt and an outer vessel 2 for containing the inner vessel 1. A heater 3 is located at the periphery of the outer vessel 2, so that temperature of a molten salt 7 can be controlled. Further, an outer vessel 4 is connected with a vacuum pump 4 and the atmosphere in the outer vessel 2 can be controlled.

Purification by a titanium plate 8 was conducted by using the purification apparatus with the constitution described above. 10 kg of anhydrous calcium chloride (melting point: 772°C) and 100 g of titanium in the form of a plate of about 1 mm thickness were charged in the inner vessel 1 made of quartz, which were contained in the outer vessel 2 made of stainless steel. A cover 5 made of quartz was placed for preventing dropping of contaminants from above and intrusion in the molten salt. Fine apertures 6 are formed in the cover 5 so as to allow gas to pass therethrough upon vacuum evacuation, temperature elevation or argon substitution.

After containing the inner vessel 1 in the outer vessel 2, the outer vessel 2 was tightly closed by a cover and the temperature inside the vessel was gradually elevated to 700°C under vacuum evacuation in order to remove the water content present in the vessel and hygroscopic moisture content of calcium chloride and then the evacuation was stopped. Then, argon gas was introduced such that the pressure in the vessel was equal with the atmospheric pressure and then the temperature was further elevated to 950°C. At the temperature, calcium chloride is in a molten state.

Subsequently, after keeping at 950°C for 25 hours, the calcium chloride was sampled and after keeping further for 25 hours, that is, 50 hours in total, it was sampled again. The sampled specimen was analyzed by ICP after cooling in order to examine the contained metal impurities. Further, metal impurities in the titanium plate used for purification was also analyzed by ICP.

On the other hand, a test was also conducted without charging the titanium plate in the inner vessel 1.

Table 1 shows the content of the metal impurities in the calcium chloride when the calcium chloride was purified by the titanium plate.

**Table 1**

| Specimen | Content of metal impurities in calcium chloride (ppm) | | | | |
|---|---|---|---|---|---|
| | Fe | Ni | Cr | Al | Mn |
| Before purification | 5 | 4 | 1.1 | 0.8 | 0.7 |
| After purification at 950°C × 25 hrs | 2.2 | 1.6 | 0.5 | 0.5 | 0.3 |
| After purification at 950°C × 50 hrs | 0.8 | 0.7 | 0.2 | 0.2 | 0.2 |
| Note) Titanium plate (plate-like titanium) was used as an adsorbent. | | | | | |

Table 2 shows the content of the metal impurities in the titanium plate when calcium chloride is purified by the titanium plate.

**Table 2**

| Specimen | Content of metal impurities in titanium plate (ppm) | | | | |
|---|---|---|---|---|---|
| | Fe | Ni | Cr | Al | Mn |
| Before purification | 10 | 2 | <1 | 1 | <1 |
| After purification | 420 | 240 | 80 | 60 | 50 |

Table 3 shows the content of the metal impurities in calcium chloride 50 hrs after the start of melting in a case where calcium chloride is melted without using the titanium plate.

**Table 3**

| Specimen | Content of metal impurities in calcium chloride (ppm) | | | | |
|---|---|---|---|---|---|
| | Fe | Ni | Cr | Al | Mn |
| Before melting | 5 | 4 | 0.8 | 0.8 | 0.7 |
| After melting | 5 | 4 | 0.9 | 0.9 | 1.0 |
| Note) with no adsorbent | | | | | |

According to the results in Table 1 and Table 2, the content of the metal impurities in the calcium chloride was decreased and the content of metal impurities in the titanium plate was increased whereas, according to Table 3, the content of metal impurities in the calcium chloride before melting and after melting was scarcely changed. In view of the above, it can be seen that the titanium plate acts as the adsorbent and is effective for purification of calcium chloride.

Successively, a similar test was conducted by using 100 g of foil-shaped titanium. The thickness of the foil-shaped titanium used herein was about 0.1 mm, which was about 1/10 of the titanium plate described above (about 1 mm thickness).
Accordingly, the surface area was about ten times more than the surface area of the plate-like titanium. Other test conditions than those described above were identical with those for the titanium plate described above.

Table 4 shows the content of the metal impurities in calcium chloride when calcium chloride was purified by the foil-like titanium.

**Table 4**

| Specimen | Content of metal impurities in calcium chloride (ppm) | | | | |
|---|---|---|---|---|---|
| | Fe | Ni | Cr | Al | Mn |
| Before purification | 5 | 4 | 1.1 | 0.8 | 0.7 |
| After purification at 950°C × 25 hrs | 1.1 | 0.8 | 0.3 | 0.3 | 0.2 |
| After purification at 950°C × 50 hrs | 0.5 | 0.3 | 0.2 | 0.1 | 0.1 |
| Note) Foil-like titanium was used as an adsorbent. | | | | | |

As apparent from Table 4, the content of the metal impurities in the calcium chloride was decreased and it can be seen that the foil-like titanium acts as an adsorbent and the calcium chloride can be purified. On the other hand, for demonstrating the effect when titanium was formed into a foil-like shape, the impurity metals in the calcium chloride were compared between a case of using the titanium plate and a case of using the foil-like titanium.

Fig. 2 is a graph showing the concentration of iron (Fe) in the calcium chloride when the plate-like titanium (titanium plate) or foil-like titanium were used as an adsorbent. As apparent from Fig. 2, use of the foil-like titanium having a larger surface area compared with the use of the plate-like titanium is more effective for decreasing the concentration of iron as the impurity metal present in the calcium chloride.

Then, it was examined as to whether the same adsorbing effect is obtained or not also for a molten salt comprising plural kinds of metal salts in admixture. Since the melting point of a mixed salt of anhydrous lithium chloride and anhydrous potassium chloride, that is, LiCl-KCl system mixed salt is lowered by eutectics, this is a useful mixed salt frequently used for electrolytic purification and refining of titanium or zirconium.

Then, 4 kg of anhydrous lithium chloride and 6 kg of anhydrous potassium chloride were used as the metal salt and purified by 100 g of the foil-like titanium. Also in this case, other test conditions than the molten salt and the shape of titanium were identical with those in the case of the titanium plate described previously.

Table 5 shows the content of the metal impurities in LiCl-KCl system mixed salt when LiCl-KCl system mixed salt was purified by the foil-like titanium.

**Table 5**

| Specimen | Content of metal impurities in LiCl-KCl system mixed salt (ppm) | | | | |
|---|---|---|---|---|---|
| | Fe | Ni | Cr | Al | Mn |
| Before purification | 5 | 4 | 1.1 | 0.8 | 0.7 |
| After purification at 950°C × 50 hrs | 0.3 | 0.2 | 0.1 | 0.2 | 0.1 |
| Note) Foil-like titanium was used as an adsorbent. | | | | | |

As apparent from Table 5, it can be seen that the content of the metal impurities in the LiCl-KCl system mixed salt was decreased and titanium acted as the adsorbent also to such mixed salt and the mixed salt can be purified.

### (B) Deoxidization method of titanium material

Using the calcium chloride purified by the foil-like titanium in (A) above, that is, the calcium chloride subjected to the purification treatment for 50 hours in Table 4 was used as the molten salt and deoxidation of the titanium material was attempted. The deoxidizing treatment was conducted by melting metallic calcium by 3% of weight based on the weight of calcium chloride to the molten salt, dipping 200 g of a titanium material of high purity of 1 mm thickness and keeping the temperature of 950°C for 10 hours in an argon atmosphere.

After completing the deoxidizing treatment, the titanium material of high purity was recovered from the calcium chloride which was cooled and solidified in the furnace, and the content of the metal impurities was analyzed by ICP. On the other hand, the titanium material of high purity applied with the deoxidizing treatment in the same manner using commercially available anhydrous calcium chloride was also analyzed by ICP.

Table 6 shows the content of the metal impurities in the titanium material before and after the deoxidizing treatment using the calcium chloride purified by the foil-like titanium as a molten salt.

**Table 6**

| Specimen | Content of metal impurities in titanium plate (ppm) | | | | | |
|---|---|---|---|---|---|---|
| | Fe | Ni | Cr | Al | Mn | O |
| Before deoxidizing treatment | 5 | 2 | 1.0 | 0.8 | 0.7 | 300 |
| After deoxidizing treatment | 6 | 2 | 1.0 | 0.8 | 0.8 | 30 |
| Note) Purified calcium chloride was used as a molten salt. | | | | | | |

Table 7 shows the content of the metal impurities in the titanium material before and after the deoxidizing treatment using calcium chloride of general or usual grade as a molten salt.

**Table 7**

| Specimen | Content of metal impurities in titanium plate (ppm) | | | | | |
|---|---|---|---|---|---|---|
| | Fe | Ni | Cr | Al | Mn | O |
| Before deoxidizing treatment | 5 | 2 | 1.0 | 0.8 | 0.7 | 300 |
| After deoxidizing treatment | 240 | 90 | 45.0 | 50 | 60 | 30 |
| Note) Calcium chloride of usual grade was used as a molten salt. | | | | | | |

It can be seen, from the results of Table 6 and Table 7, that the deoxidization could be attained although the content of the metal impurities contained in the titanium material were scarcely changed in a case of using the calcium chloride purified by the foil-like titanium as a molten salt. On the contrary, the titanium material was contaminated by the metal impurities in the molten salt and the content of the metal impurities in the titanium material was increased in a case of using the calcium chloride of usual grade.

### (C) Production method of titanium material by molten salt electrolysis

Electrolysis was attempted by using the LiCl-KCl system mixed salt purified in (A) above, that is, the LiCl-KCl system mixed salt subjected to the purification treatment for 50 hours in Table 5 were used as the molten salt.

Electrolysis was conducted by immersing a titanium material as a cathode and sponge titanium particles contained in a nickel net as an anode in the molten salt and supplying electric current between both of the electrodes for 15 hours while keeping the temperature at 900°C. After completing the electrolysis, the content of the metal impurities in the titanium material deposited on the cathode was analyzed by ICP.

On the other hand, electrolysis was conducted in the same manner by using the LiCl-KCl system mixed salt before purification in Table 5 as the molten salt, and the content of the metal impurities in the titanium material deposited on the cathode was analyzed by ICP.

Table 8 shows the content of the metal impurities in the titanium material deposited on the cathode when electrolysis was conducted by using the purified LiCl-KCl system mixed salt and the LiCl-KCl system mixed salt before purification as a molten salts.

**Table 8**

| Specimen | Content of metal impurities in titanium plate (ppm) | | | | | |
|---|---|---|---|---|---|---|
| | Fe | Ni | Cr | Al | Mn | O |
| Purified Li-KCl system mixed salt | < 0.1 | < 0.1 | 0.1 | 0.1 | 0.3 | 80 |
| Li-KCl mixed salt before purification | 110 | 40 | 22 | 17 | 20 | 80 |

As apparent from Table 8, the titanium material of extremely high purity could be produced in a case of using the purified LiCl-KCl system mixed salt, whereas the titanium material of high purity could not be produced being contaminated by the metal impurities in the mixed salt in a case of using the LiCl-KCl system mixed salt before purification.

### Industrial Applicability

According to the purification method of the metal salt of the present invention, a molten metal salt comprising an alkali metal salt, an alkaline earth metal salt or a mixture thereof can be purified simply and conveniently at a good efficiency, requiring no special apparatus leading to an increase in the production cost. Then, contamination caused by the metal impurities in the molten salt can be minimized by using the metal salt purified by the purification method and the titanium material of high quality can be produced. This can be applied generally as a method of producing the titanium of high purity used as the material for electronic parts requiring high accuracy.

## Claims

1. A method of purifying a metal salt which comprises bringing the metal salt formed by melting an alkali metal salt, an alkaline earth metal salt or a mixture thereof into contact with one or more of titanium, titanium alloy, zirconium and zirconium alloy, thereby adsorbing impurities in the metal salt.

2. A purification method of a metal salt according to claim 1, wherein the metal salt is melted in a vessel made of titanium or titanium alloy, or a vessel lined with titanium or titanium alloy.

3. A purification method of a metal salt according to claim 1 or 2, wherein foil-like titanium is used as an adsorbent.

4. A method of deoxidizing a titanium material comprising dissolving metallic calcium to a molten product of a metal salt purified by the purification method according to claim 1 or 2 and bringing the same into contact with the titanium material.

5. A deoxidization method of a titanium material according to claim 4, wherein calcium chloride is used as the molten salt.

6. A deoxidization method of a titanium material according to claim 4 or 5, wherein the exactly same vessel used for the purification of the metal salt is used.

7. A method of producing a titanium material which comprises conducting molten salt electrolysis by using a molten product of a metal salt purified by the purification method according to claim 1 or 2 for electrolytic bath.

8. A production method of a titanium material according to claim 7, wherein an LiCl-KCl system mixed salt is used under electrolysis as the molten salt.

9. A production method of a titanium material according to claim 7 or 8, wherein the exactly same vessel used for the purification of metal salt is used.
